# EUROPÄISCHE PATENTSCHRIFT

(11) **EP 2 122 166 B1**
(45) Veröffentlichungstag und Bekanntmachung des Hinweises auf die Patenterteilung: **06.04.2011**
(21) Anmeldenummer: 08715684.0
(22) Anmeldetag: 02.02.2008
(51) Int. Cl.: F04B 17/03, F04B 53/08, H02K 5/20

(54) **MOTORPUMPENEINHEIT INSBESONDERE FÜR EIN HOCHDRUCKREINIGUNGSGERÄT**
MOTOR PUMP UNIT PARTICULARLY FOR A HIGH-PRESSURE CLEANING DEVICE
UNITÉ MOTOPOMPE DESTINÉE EN PARTICULIER UN APPAREIL DE NETTOYAGE HAUTE PRESSION

(30) Priorität: 21.02.2007 DE 102007009394
(43) Veröffentlichungstag der Anmeldung: 25.11.2009
(73) Patentinhaber: Alfred Kärcher GmbH & Co. KG, 71364 Winnenden (DE)
(72) Erfinder: SCHIFFHAUER, Walter, 71397 Leutenbach (DE); POL, Lanfranco, I-46026 Quistello Mn (IT)
(74) Vertreter: Hoeger, Stellrecht & Partner Patentanwälte
(86) Internationale Anmeldenummer: PCT/EP2008/000845
(87) Internationale Veröffentlichungsnummer: WO 2008/101594

(56) Entgegenhaltungen:
- EP-A- 0 819 852
- DE-A1- 2 920 883
- DE-A1- 3 545 665
- DE-U1- 8 111 792
- DE-U1- 8 536 175

## Beschreibung

Die Erfindung betrifft eine Motorpumpeneinheit, insbesondere für ein Hochdruckreinigungsgerät, mit den Merkmalen des Oberbegriffes von Patentanspruch 1.

Motorpumpeneinheiten sind aus den Offenlegungsschriften DE 35 45 665 A1 und DE 36 03 423 A1 bekannt. Sie kommen insbesondere bei Hochdruckreinigungsgeräten zum Einsatz, bei denen eine Flüssigkeit, vorzugsweise Wasser, über den Saugeinlass einem Pumpraum zugeführt, unter Druck gesetzt und anschließend über den Druckauslass abgegeben werden kann. Der Antrieb der Pumpe erfolgt mittels eines Elektromotors. Um diesen zu kühlen, kann dem Hohlraum zwischen dem Motorgehäuse und dem Kühlgehäuse eine Kühlflüssigkeit zugeführt werden. In der DE 35 45 665 A1 wird in diesem Zusammenhang vorgeschlagen, den Motor mit Wasser zu kühlen und das durch den Motor angewärmte Wasser dem Saugeinlass zuzuführen. Somit kann mittels der Pumpe nicht nur Flüssigkeit unter Druck gesetzt werden, sondern es kann die Flüssigkeit auch durch den Hohlraum, der das Motorgehäuse umgibt, gefördert werden. Die Motorpumpeneinheiten, die aus der DE 35 45 665 A1 und DE 36 03 423 A1 bekannt sind, weisen ein topfförmiges Kühlgehäuse auf mit einem Kühlgehäusezulauf, der am Boden des Kühlgehäuses angeordnet ist, und mit einem Kühlgehäuseablauf, der radial vom Kühlgehäuse absteht. Um vom Kühlgehäusezulauf über den Hohlraum und den Kühlgehäuseablauf eine Strömungsverbindung zum Saugeinlasss sicherzustellen, sind deshalb aufwändige Verbindungsleitungen, beispielsweise Schlauchleitungen, erforderlich, die mittels entsprechender Armaturen am Kühlgehäusezulauf und am Kühlgehäuseablauf montiert werden müssen.

Eine Motorpumpeneinheit mit den Merkmalen des Oberbegriffes von Patentenspruch 1 ist aus DE 81 11 792 U1 bekannt. Bei dieser Motorpumpeneinheit ist das Motorgehäuse einstückig mit einem Kühlgehäuse verbunden, das einen Teil des Motorgehäuses in Umfangsrichtung umgibt, wobei zwischen dem Motorgehäuse und dem Kühlgehäuse ein Hohlraum bereitgestellt wird. Diesem Hohlraum kann über eine geradlinige Anschlussleitung Flüssigkeit zugeführt werden. Vom Hohlraum führt eine U-förmige Verbindungsleitung zum Saugeinlass der Pumpe, so dass die Flüssigkeit, nachdem sie den Hohlraum durchströmt hat, der Pumpe zugeführt werden kann. Die geradlinige Anschlussleitung und die U-förmige Verbindungsleitung bilden in ihrer Gesamtheit eine Verbindungseinrichtung aus, die seitlich neben der Pumpe angeordnet ist.

Aufgabe der vorliegenden Erfindung ist es, eine Motorpumpeneinheit der eingangs genannten Art derart weiterzubilden, dass bei Bedarf auf einfache Weise eine Strömungsverbindung vom Kühlgehäusezulauf über den Hohlraum und den Kühlgehäuseablauf zum Saugeinlass hergestellt werden kann.

Diese Aufgabe wird durch eine Motorpumpeneinheit mit den Merkmalen von Patentanspruch 1 gelöst.

Bei der erfindungsgemäßen Motorpumpeneinheit kommt eine Verbindungseinrichtung zum Einsatz, mit deren Hilfe bei Bedarf auf einfache Weise unter Druck zu setzende Flüssigkeit zunächst durch den das Motorgehäuse umgebenden Hohlraum und dann zum Saugeinlass geleitet werden kann. Die Verbindungseinrichtung weist hierzu einen ersten Anschluss auf, an den zur Bereitstellung von Flüssigkeit eine Versorgungsleitung angeschlossen werden kann. Vom ersten Anschluss wird die Flüssigkeit über den ersten Strömungskanal und den Kühlgehäusezulauf dem Hohlraum zugeführt. Ausgehend vom Hohlraum kann die Flüssigkeit dann über den Kühlgehäuseablauf und einen sich daran anschließenden zweiten Strömungskanal einem zweiten Anschluss der Verbindungseinrichtung zugeführt werden. Der zweite Anschluss kann an den Saugeinlass der Motorpumpeneinheit angeschlossen werden, so dass insgesamt ausgehend vom ersten Anschluss der Verbindungseinrichtung durch den Hohlraum hindurch eine Strömungsverbindung zum Saugeinlass der Pumpe bereitgestellt wird.

Die erfindungsgemäß zum Einsatz kommende Verbindungseinrichtung ist seitlich neben der Pumpe angeordnet, so dass die Motorpumpeneinheit einschließlich der Verbindungseinrichtung eine kompakte Bauform aufweisen kann.

Das Kühlgehäuse umfasst ein das Motorgehäuse umgebendes Mantelteil und ein von diesem nach außen abstehendes Anschlussteil, wobei der Kühlgehäusezulauf und der Kühlgehäuseablauf am Anschlussteil angeordnet sind.

Die Verbindungseinrichtung ist mit dem Saugeinlass und dem Kühlgehäusezulauf und -ablauf lösbar verbindbar. Dies hat den Vorteil, dass der Elektromotor wahlweise mit Luft gekühlt werden kann oder auch mittels Flüssigkeit. Eine Luftkühlung kann in Erwägung gezogen werden, falls vom Elektromotor keine allzu großen Leistungen bereitgestellt werden müssen. Es kann dann die Verbindungseinrichtung vom Saugeinlass und vom Kühlgehäusezulauf und -ablauf getrennt werden, stattdessen kann an den Saugeinlass ein üblicher Saugstutzen angeschlossen werden, über den die unter Druck zu setzende Flüssigkeit der Pumpe zugeführt werden kann.

Falls größere Wärmemengen vom Elektromotor abzuführen sind, kann die Verbindungseinrichtung an den Saugeinlass und die Zu- und Abläufe des Kühlgehäuses angeschlossen werden. Eine weitere Umrüstung der Motorpumpeneinheit ist dann nicht erforderlich, und aufgrund der Bereitstellung der beiden Anschlüsse und der beiden Strömungskanäle gestaltet sich das Anschließen der Verbindungseinrichtung an den Saugeinlass und die Zu- und Abläufe sehr einfach.

Von besonderem Vorteil ist es, wenn die Verbindungseinrichtung als mit dem Saugeinlass und dem Kühlgehäusezulauf und -ablauf lösbar verbindbare Baueinheit ausgestaltet ist. Dies erleichtert die Montage der Verbindungseinrichtung an der Pumpe und am Kühlgehäuse. Die Verbindungseinrichtung kann in Form eines Anschlussmoduls ausgestaltet sein, das bedarfsweise, nämlich bei hoher Wärmeentwicklung des Elektromotors, eingesetzt werden kann.

Als Elektromotor kann beispielsweise ein Universalmotor zum Einsatz kommen.

Von besonderem Vorteil ist es, wenn der Elektromotor als Asynchronmotor ausgebildet ist.

Eine besonders einfache Montage der Verbindungseinrichtung wird bei einer bevorzugten Ausführungsform dadurch erzielt, dass die Verbindungseinrichtung als starres Leitungssystem ausgestaltet ist. Die Verbindungseinrichtung bildet somit ein in sich stabiles Bauteil aus, das auf einfache Weise seitlich neben der Pumpe positioniert und mit dem Saugeinlass und den Zu- und Abläufen des Kühlgehäuses verbunden werden kann.

Vorzugsweise ist die Verbindungseinrichtung aus Kunststoff gefertigt. Dies ermöglicht nicht nur eine kostengünstige Herstellung der Verbindungseinrichtung sondern auch eine beträchtliche Gewichtseinsparung.

Günstigerweise sind die beiden Strömungskanäle der Verbindungseinrichtung parallel zueinander angeordnet. Besonders vorteilhaft ist es, wenn die beiden Strömungskanäle seitlich nebeneinander angeordnet sind. Bevorzugt sind sie mit dem Kühlgehäusezulauf bzw. dem Kühlgehäuseablauf steckbar verbindbar. Es kann beispielsweise vorgesehen sein, dass die freien Enden der beiden Strömungskanäle in korrespondierende Buchsen der Zu- und Abläufe eingesteckt werden können.

Die beiden Strömungskanäle können beispielsweise in Form starrer Rohrleitungen ausgestaltet sein.

Bei einer besonders bevorzugten Ausgestaltung der erfindungsgemäßen Motorpumpeneinheit ist das Kühlgehäuse mit einem Pumpengehäuse der Pumpe lösbar verbindbar, beispielsweise verschraubbar. Falls kein Bedarf an einer Flüssigkeitskühlung besteht, kann das Kühlgehäuse vom Rest der Motorpumpeneinheit abgenommen werden. Soll eine Flüssigkeitskühlung zum Einsatz kommen, kann das Kühlgehäuse mit dem Pumpengehäuse verschraubt werden, wobei es das Motorgehäuse unter Ausbildung eines Hohlraumes umgibt.

Günstig ist es, wenn das Kühlgehäuse aus Kunststoff gefertigt ist, denn dadurch können die Herstellungskosten und das Gewicht der Motorpumpeneinheit reduziert werden.

Von Vorteil ist es, wenn der Kühlgehäusezulauf und der Kühlgehäuseablauf nebeneinander angeordnet sind, denn dadurch kann die Montage der Verbindungseinrichtung vereinfacht werden.

Das Anschlussteil steht bei einer bevorzugten Ausgestaltung der Erfindung in Richtung der Pumpe über das Mantelteil hervor, denn dadurch kann die Strömungsverbindung zwischen dem Kühlgehäuse und dem Saugeinlass der Pumpe besonders kurz gehalten werden.

Günstig ist es, wenn das Mantelteil einstückig mit dem Anschlussteil verbunden ist, es kann beispielsweise vorgesehen sein, dass Mantelteil und Anschlussteil als einteiliges Kunststoffformteil ausgestaltet sind.

Bevorzugt weist das Kühlgehäuse ein das Motorgehäuse in Umfangsrichtung umgebendes Mantelteil auf, das innenseitig mehrere im Abstand zueinander angeordnete, insbesondere axial verlaufende Stützrippen umfasst, die am Motorgehäuse anliegen. Mittels der Stützrippen kann das Kühlgehäuse stabil am Motorgehäuse abgestützt werden, wobei sich zwischen dem Motorgehäuse und dem Kühlgehäuse ein Hohlraum ausbildet, durch den die Kühlflüssigkeit hindurchgeleitet werden kann. Das Kühlgehäuse umgibt bei einer derartigen Ausgestaltung das Motorgehäuse in Umfangsrichtung. Es kann somit nach Art einer Rohrabschnittes ausgebildet sein. Die der Pumpe abgewandte Rückwand des Motorgehäuses kann ein Lager für die Motorwelle aufnehmen, wobei sie vom Kühlgehäuse nicht abgedeckt ist.

Vorzugsweise ist zwischen dem Kühlgehäusezulauf und dem Kühlgehäuseablauf im Hohlraum eine Stützrippe angeordnet. Mittels der Stützrippe kann auf konstruktiv einfache Weise sichergestellt werden, dass die dem Hohlraum über den Kühlgehäusezulauf zugeführte Flüssigkeit das Motorgehäuse in Umfangsrichtung umströmen muss, ehe es zum Kühlgehäuseablauf gelangen kann, so dass eine wirkungsvolle Wärmeabfuhr sichergestellt ist.

Bei einer besonders bevorzugten Ausführungsform definieren die Stützrippen einen labyrinthartigen, in Umfangsrichtung um das Motorgehäuse herumführenden Strömungsweg vom Kühlgehäusezulauf zum Kühlgehäuseablauf. Hierzu kann beispielsweise vorgesehen sein, dass die Stützrippen in axialer Richtung jeweils versetzt zueinander einen Durchlass aufweisen, durch den die Kühlflüssigkeit hindurchströmen kann. Die axial versetzte Anordnung der Durchlässe stellt sicher, dass die Kühlflüssigkeit den das Motorgehäuse umgebenden Hohlraum mäanderförmig oder zickzackförmig durchströmt. Dadurch kann der Strömungsweg der Kühlflüssigkeit innerhalb des Hohlraumes verlängert und dadurch die Wärmeaufnahme gesteigert werden.

Vorzugsweise umfasst das Kühlgehäuse ein nach Art eines Zylindermantels ausgestaltetes Mantelteil, das in axialer Richtung auf das Motorgehäuse aufschiebbar ist. Dies vereinfacht die Montage des Kühlgehäuses am Motorgehäuse, zur Montage ist es nämlich lediglich erforderlich, das Mantelteil in axialer Richtung auf das Motorgehäuse aufzuschieben.

Günstig ist es, wenn das Kühlgehäuse eine flüssigkeitsdicht an das Motorgehäuse anlegbare Dichtlippe aufweist. Die Dichtlippe kann mit einer Wand des Kühlgehäuses lösbar verbunden sein. Alternativ kann vorgesehen sein, dass die Dichtlippe an die Wand des Kühlgehäuses angeformt ist, insbesondere kann vorgesehen sein, dass die Wand des Kühlgehäuses und die Dichtlippe einstückig miteinander verbunden und aus demselben Material gefertigt sind. Alternativ kann auch vorgesehen sein, dass am Motorgehäuse eine Dichtlippe angeordnet ist, beispielsweise ein Dichtring, an den das Kühlgehäuse dichtend anlegbar ist. Mittels der Dichtlippe kann der Hohlraum an einem vorderen und/oder hinteren Endbereich des Kühlgehäuses abgedichtet werden. Umfasst das Kühlgehäuse ein zylinderförmiges Mantelteil, das eine der Pumpe zugewandte vordere Öffnung und eine der Pumpe abgewandte hintere Öffnung aufweist, so kann eine Dichtlippe beispielsweise der hinteren Öffnung benachbart angeordnet sein.

Um den Hohlraum, vorzugsweise in einem der Pumpe zugewandten vorderen Endbereich abzudichten, ist es günstig, wenn das Motorgehäuse einen nach außen abstehenden Ringflansch aufweist, auf den das Kühlgehäuse flüssigkeitsdicht aufschiebbar ist. Mittels des Ringflansches kann das Kühlgehäuse elastisch verformt werden, so dass es flüssigkeitsdicht am Ringflansch anliegt und dadurch den Hohlraum abdichtet. Es kann auch vorgesehen sein, dass zwischen dem Kühlgehäuse und dem Motorgehäuse mindestens ein Dichtring angeordnet ist zum Abdichten des Hohlraumes.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen Motor- pumpeneinheit;
- Figur 2:: eine perspektivische Darstellung der Motorpumpeneinheit aus Fi- gur 1 nach Art einer Explosionszeichnung;

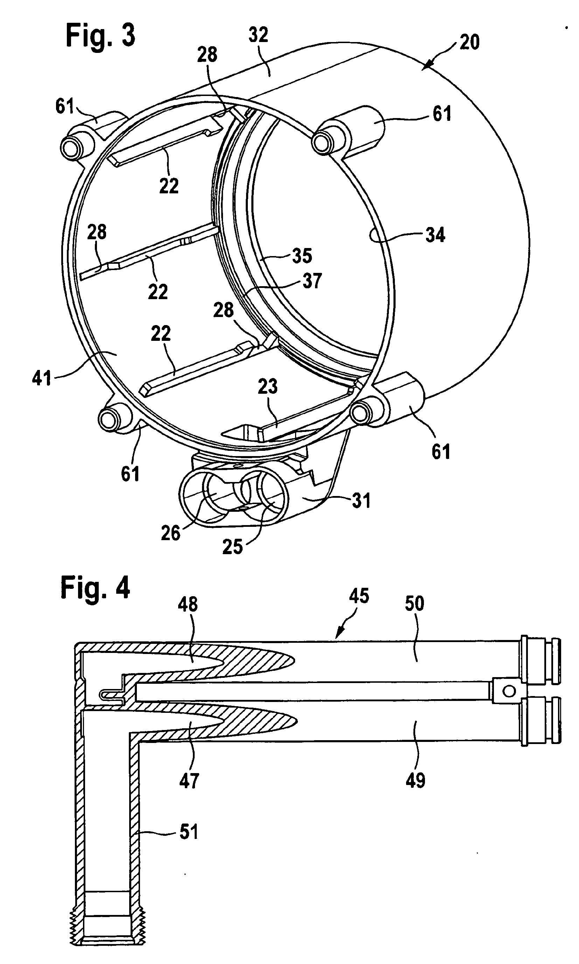

- Figur 3:: eine perspektivische Darstellung eines Kühlgehäuses der Motor- pumpeneinheit aus Figur 1;
- Figur 4:: eine Schnittansicht längs der Linie 4-4 in Figur 2 und

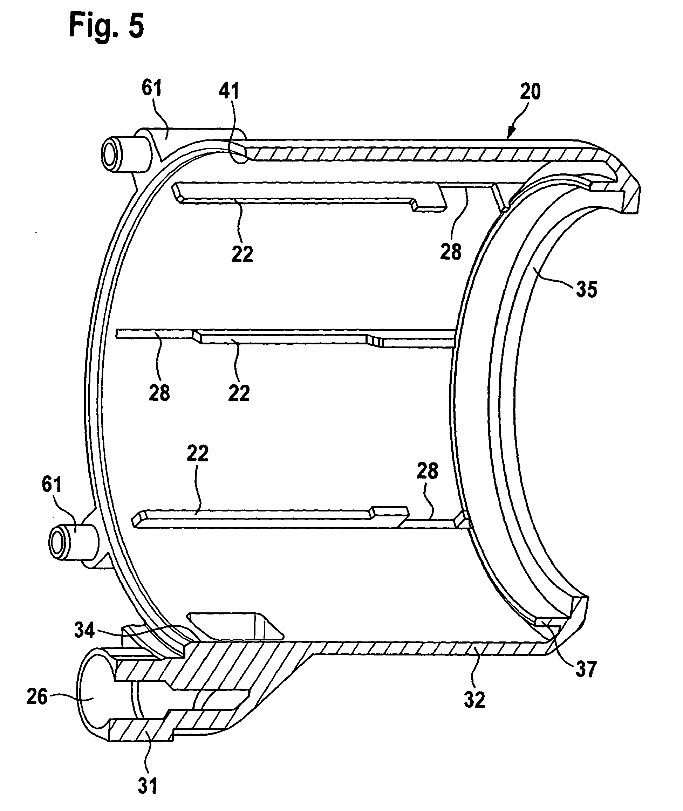

- Figur 5:: eine perspektivische Schnittdarstellung des Kühlgehäuses aus Fi- gur 3.

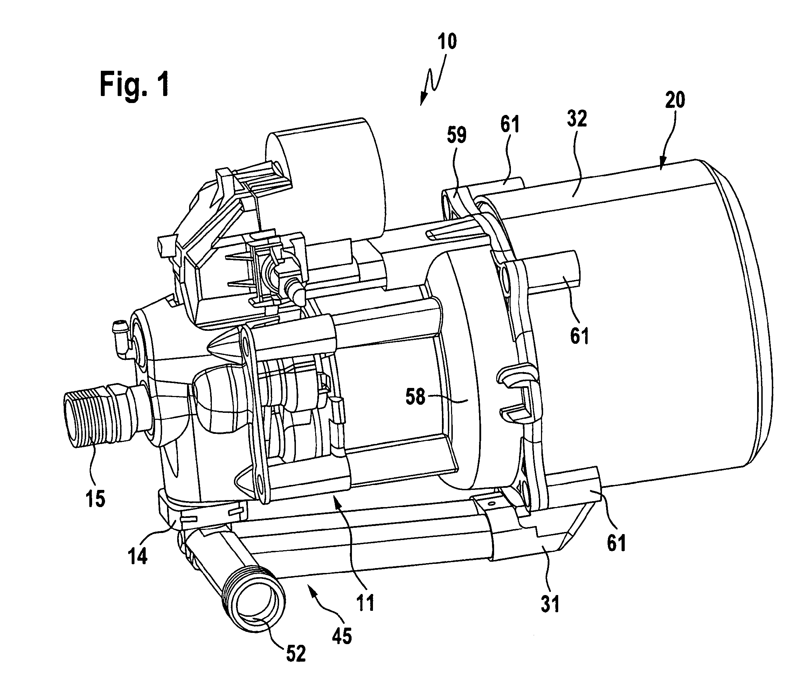

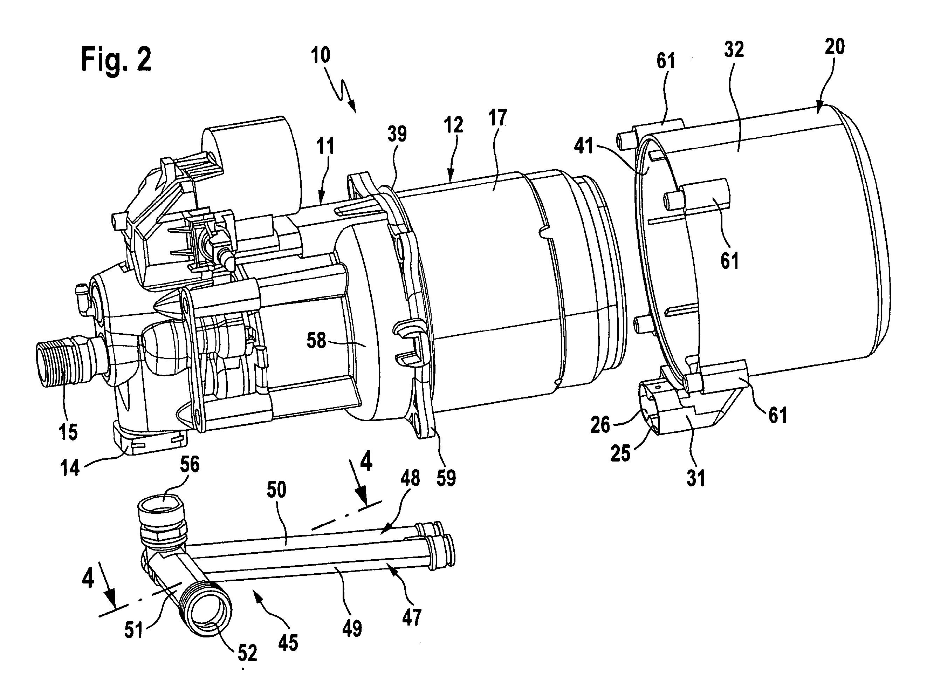

In der Figuren 1 und 2 ist schematisch eine erfindungsgemäße Motorpumpeneinheit 10 dargestellt, die insbesondere bei Hochdruckreinigungsgeräten zum Einsatz kommt. Sie umfasst eine Pumpe 11, die als Verdrängerpumpe ausgebildet sein kann. Im dargestellten Ausführungsbeispiel ist sie als Kolbenpumpe ausgebildet. Angetrieben wird die Pumpe 11 von einem Elektromotor 12, in der dargestellten Ausführungsform kommt ein Asynchronmotor zum Einsatz.

Die Pumpe 11 weist einen Saugeinlass 14 auf, über den Flüssigkeit, vorzugsweise Wasser, einem an sich bekannten Pumpraum zugeführt werden kann. Im Pumpraum wird die Flüssigkeit unter Druck gesetzt, und über einen Druckauslass 15 wird die unter Druck gesetzte Flüssigkeit abgegeben. An den Druckauslass 15 kann beispielsweise ein Hochdruckschlauch angeschlossen werden, der an seinem freien Ende eine Sprühdüse oder eine Spritzlanze trägt.

Der Elektromotor 12 weist ein topfartiges Motorgehäuse 17 auf, das in Umfangsrichtung von einem Kühlgehäuse 20 umgeben ist, wobei Motorgehäuse 17 und Kühlgehäuse 20 zwischen sich einen Hohlraum definieren, der das Motorgehäuse 17 in Umfangsrichtung umgibt.

Innenseitig weist das Kühlgehäuse 20 mehrere, in gleichmäßigem Abstand zueinander angeordnete und jeweils in axialer Richtung, das heißt in Längsrichtung der Motorpumpeneinheit 10 verlaufende Stützrippen 22 auf, die außenseitig am Motorgehäuse 17 anliegen und nach Art eines Abstandshalters den Hohlraum zwischen dem Motorgehäuse 17 und dem Kühlgehäuse 20 sicherstellen. Mit Ausnahme einer Stützrippe 23, die zwischen einem Kühlgehäusezulauf 25 und einem Kühlgehäuseablauf 26 angeordnet ist, weisen die Stützrippen 22 jeweils einen Durchlass 28 auf, über den Flüssigkeit, die dem Hohlraum über den Kühlgehäusezulauf 25 zugeführt wird, hindurchströmen kann. Die Durchlässe 28 benachbarter Stützrippen 22 sind axial versetzt zueinander angeordnet, so dass die Stützrippen 22 insgesamt einen labyrinthartigen, in Umfangsrichtung um das Motorgehäuse 17 herumführenden Strömungsweg vom Kühlgehäusezulauf 25 zum Kühlgehäuseablauf 26 definieren.

Der Kühlgehäusezulauf 25 und der Kühlgehäuseablauf 26 sind nebeneinander an einem Anschlussteil 31 des Kühlgehäuses 20 angeordnet, das außenseitig von einem Mantelteil 32 des Kühlgehäuses 20 absteht. Das Mantelteil 32 ist nach Art eines Rohrabschnitts oder eines Zylindermantels ausgestaltet und umgibt das Motorgehäuse 17. Es definiert eine vordere Öffnung 34, die der Pumpe 11 zugewandt ist, und eine hintere Öffnung 35, die der Pumpe 11 abgewandt ist. Der hinteren Öffnung 35 benachbart weist das Mantelteil 32 eine dichtend an das Motorgehäuse 17 anlegbare Dichtlippe 37 auf, die den Hohlraum zwischen dem Motorgehäuse 17 und dem Kühlgehäuse 20 im Bereich der hinteren Öffnung 35 abdichtet.

In Höhe der vorderen Öffnung 34 weist das Motorgehäuse 17 einen radial nach außen abstehenden Ringflansch 39 auf, auf den das Mantelteil 32 mit einem vorderen Endbereich 41 aufgeschoben werden kann, um den Hohlraum zwischen dem Motorgehäuse 17 und dem Kühlgehäuse 20 in Höhe der vorderen Öffnung 34 abzudichten.

Die dem Saugeinlass 14 zugeführte Flüssigkeit kann zuvor durch den Hohlraum zwischen dem Motorgehäuse 17 und dem Kühlgehäuse 20 hindurchgeführt werden. Hierzu kommt erfindungsgemäß eine Verbindungseinrichtung 45 zum Einsatz, die in Form eines starren Leitungssystems ausgebildet und seitlich neben der Pumpe 11 angeordnet ist. Sie umfasst einen ersten Strömungskanal 47 und einen zweiten Strömungskanal 48, die jeweils als Rohrstück 49 bzw. 50 ausgebildet sind. Das erste Rohrstück 49 geht aus von einer starren Zuleitung 51, von der es rechtwinklig abzweigt. Die Zuleitung 51 bildet an ihrem freien Ende einen ersten Anschluss 52 aus und das freie Ende des ersten Rohrstückes 49 kann mit dem Kühlgehäusezulauf 25 verbunden werden. Hierzu bildet das Anschlussteil 31 eine Anschlussbuchse 54 aus, in die die freien Enden der beiden Rohrstücke 49 und 50 eingesetzt werden können. Über den ersten Anschluss 52, die Zuleitung 51 und das erste Rohrstück 49 kann Flüssigkeit dem Kühlgehäusezulauf 25 zugeführt werden, so dass es anschließend den Hohlraum zwischen dem Motorgehäuse 17 und dem Kühlgehäuse 20 durchströmen kann. Ausgehend vom Kühlgehäuseablauf 26 kann die Flüssigkeit dann über das zweite Rohrstück 50 einem zweiten Anschluss 56 der Verbindungseinrichtung 45 zugeführt werden. Der zweite Anschluss 56 ist an den Saugeinlass 14 anschließbar, so dass die Flüssigkeit, nachdem sie den Hohlraum zwischen dem Motorgehäuse 17 und dem Kühlgehäuse 20 durchströmt hat, von der Pumpe 11 unter Druck gesetzt und über den Druckauslass 15 abgegeben werden kann.

Die Verbindungseinrichtung 45 ist als mit dem Saugeinlass 14 und dem Kühlgehäusezulauf 25 sowie dem Kühlgehäuseablauf 26 lösbar verbindbare Baueinheit ausgestaltet und aus Kunststoff gefertigt. Sie kommt zum Einsatz, wenn der Elektromotor 12 mit hoher elektrischer Leistung betrieben wird, folglich eine hohe Abwärme erzeugt und deshalb von Flüssigkeit gekühlt werden soll. Falls der Elektromotor 12 mit verhältnismäßig geringer Leistung betrieben wird, kann die Verbindungseinrichtung 45 entfallen. In diesem Fall kann unter Druck zu setzende Flüssigkeit über einen an sich bekannten und deshalb in der Zeichnung nicht dargestellten Saugstutzen an den Saugeinlass 14 geführt werden, ohne dass die Flüssigkeit zuvor den Hohlraum zwischen dem Motorgehäuse 17 und dem Kühlgehäuse 20 durchströmt.

Das Kühlgehäuse 20 ist als einteiliges Kunststoffformteil ausgestaltet und kann bei der Montage der Motorpumpeneinheit 10 in axialer Richtung auf das Motorgehäuse 17 aufgeschoben werden. Zur lösbaren Verbindung zwischen dem Motorgehäuse 17 und einem radial nach außen von einem Pumpengehäuse 58 abstehenden Halteflansch 59 können Verbindungsschrauben zum Einsatz kommen mit einem selbstschneidenden Gewinde, so dass die Verbindungsschrauben unmittelbar in außenseitig an das Mantelteil 32 angeformte Schraubdome 61 des Kühlgehäuses 20 eingeschraubt werden können. Dadurch können zusätzliche Kontermuttern entfallen. Dies stellt eine zusätzliche Erleichterung der Montage der Motorpumpeneinheit 10 dar.

## Patentansprüche

1. Motorpumpeneinheit, insbesondere für ein Hochdruckreinigungsgerät, mit einem Elektromotor (12) und einer Pumpe (11), wobei die Pumpe (11) einen Saugeinlass (14) zum Ansaugen von Flüssigkeit und einen Druckauslass (15) zum Abgeben von unter Druck gesetzter Flüssigkeit aufweist und wobei der Elektromotor (12) ein Motorgehäuse (17) umfasst, das unter Ausbildung eines Hohlraumes von einem Kühlgehäuse (20) umgeben ist, wobei Kühlflüssigkeit dem Hohlraum über einen Kühlgehäusezulauf (25) zuführbar und über einen Kühlgehäuseablauf (26) ableitbar ist, wobei der Kühlgehäuseablauf (26) mit dem Saugeinlass (14) in Strömungsverbindung steht, und wobei die Motorpumpeneinheit (10) eine seitlich neben der Pumpe (11) angeordnete Verbindungseinrichtung (45) aufweist mit einem ersten Anschluss (52), der über einen ersten Strömungskanal (47) mit dem Kühlgehäusezulauf (25) verbunden ist und mit einem zweiten Anschluss (56), der über einen zweiten Strömungskanal (48) mit dem Kühlgehäuseablauf (26) verbunden und der an den Saugeinlass (14) angeschlossen ist, **dadurch gekennzeichnet, dass** das Kühlgehäuse (20) ein das Motorgehäuse (17) umgebendes Mantelteil (32) und ein von diesem nach außen abstehendes Anschlussteil (31) umfasst, wobei der Kühlgehäusezulauf (25) und der Kühlgehäuseablauf (26) am Anschlussteil (31) angeordnet sind, wobei der erste Anschluss (52) der Verbindungseinrichtung (45) über den ersten Strömungskanal (47) mit dem Kühlgehäusezulauf (25) lösbar verbunden ist und wobei der zweite Anschluss (56) der Verbindungseinrichtung (45) über den zweiten Strömungskanal (48) mit dem Kühlgehäuseablauf (26) lösbar verbunden ist.

2. Motorpumpeneinheit nach Anspruch 1, **dadurch gekennzeichnet, dass** die Verbindungseinrichtung (45) als mit dem Saugeinlass (14) und dem Kühlgehäusezulauf (25) und -ablauf (26) lösbar verbindbare Baueinheit ausgestaltet ist.

3. Motorpumpeneinheit nach Anspruch 1 oder 2, **dadurch gekennzeichnet, dass** die Verbindungseinrichtung (45) als starres Leitungssystem ausgestaltet ist.

4. Motorpumpeneinheit nach einem der voranstehenden Ansprüche, **dadurch gekennzeichnet, dass** die Verbindungseinrichtung (45) aus Kunststoff gefertigt ist.

5. Motorpumpeneinheit nach einem der voranstehenden Ansprüche, **dadurch gekennzeichnet, dass** die beiden Strömungskanäle (47, 48) parallel zueinander angeordnet sind.

6. Motorpumpeneinheit nach einem der voranstehenden Ansprüche, **dadurch gekennzeichnet, dass** die beiden Strömungskanäle (47, 48) als starre Rohrleitungen (49, 50) ausgestaltet sind.

7. Motorpumpeneinheit nach einem der voranstehenden Ansprüche, **dadurch gekennzeichnet, dass** das Kühlgehäuse (20) mit einem Pumpengehäuse (58) der Pumpe (11) lösbar verbindbar ist.

8. Motorpumpeneinheit nach einem der voranstehenden Ansprüche, **dadurch gekennzeichnet, dass** das Kühlgehäuse (20) aus Kunststoff gefertigt ist.

9. Motorpumpeneinheit nach einem der voranstehenden Ansprüche, **dadurch gekennzeichnet, dass** der Kühlgehäusezulauf (25) und er Kühlgehäuseablauf (26) nebeneinander angeordnet sind.

10. Motorpumpeneinheit nach Anspruch 1, **dadurch gekennzeichnet, dass** das Anschlussteil (31) in Richtung der Pumpe (11) über das Mantelteil (32) hervorsteht.

11. Motorpumpeneinheit nach Anspruch 1 oder 10, **dadurch gekennzeichnet, dass** das Mantelteil (32) einstückig mit dem Anschlussteil (31) verbunden ist.

12. Motorpumpeneinheit nach einem der voranstehenden Ansprüche, **dadurch gekennzeichnet, dass** das Kühlgehäuse (20) ein das Motorgehäuse (17) in Umfangsrichtung umgebendes Mantelteil (32) aufweist, das innenseitig mehrere im Abstand zueinander angeordnete Stützrippen (22, 23) umfasst, die am Motorgehäuse (17) anliegen.

13. Motorpumpeneinheit nach Anspruch 12, **dadurch gekennzeichnet, dass** zwischen dem Kühlgehäusezulauf (25) und dem Kühlgehäuseablauf (26) im Hohlraum eine Stützrippe (23) angeordnet ist.

14. Motorpumpeneinheit nach Anspruch 12 oder 13, **dadurch gekennzeichnet, dass** die Stützrippen (22, 23) einen labyrinthartigen, in Umfangsrichtung um das Motorgehäuse (17) herumführenden Strömungsweg vom Kühlgehäusezulauf (25) zum Kühlgehäuseablauf (26) definieren.

15. Motorpumpeneinheit nach einem der voranstehenden Ansprüche, **dadurch gekennzeichnet, dass** das Kühlgehäuse (20) ein nach Art eines Zylindermantels ausgestaltetes Mantelteil (32) aufweist, das in axialer Richtung auf das Motorgehäuse (17) aufschiebbar ist.

16. Motorpumpeneinheit nach einem der voranstehenden Ansprüche, **dadurch gekennzeichnet, dass** das Kühlgehäuse (20) eine flüssigkeitsdicht an das Motorgehäuse (17) anlegbare Dichtlippe (37) aufweist.

17. Motorpumpeneinheit nach einem der voranstehenden Ansprüche, **dadurch gekennzeichnet, dass** das Motorgehäuse (17) einen nach außen abstehenden Ringflansch (39) aufweist, auf den das Kühlgehäuse (20) flüssigkeitsdicht aufschiebbar ist.

## Claims

1. Motor-pump unit, in particular for a high-pressure cleaning appliance, having an electric motor (12) and a pump (11), the pump (11) having a suction inlet (14) for taking in liquid and a pressure outlet (15) for discharging pressurized liquid, and the electric motor (12) comprising a motor housing (17) which is enclosed by a cooling housing (20), whereby a cavity is formed, it being possible for cooling liquid to be fed to the cavity via a cooling-housing inflow (25) and to be conducted away therefrom via a cooling-housing outflow (26), the cooling-housing outflow (26) being in flow connection with the suction inlet (14), and the motor-pump unit (10) having a connecting device (45) which is disposed laterally alongside the pump (11) and has a first connection (52), which is connected to the cooling-housing inflow (25) via a first flow channel (47), and a second connection (56), which is connected to the cooling-housing outflow (26) via a second flow channel (48) and is connected to the suction inlet (14), **characterized in that** the cooling housing (20) comprises a casing part (32), which encloses the motor housing (17), and a connection part (31), which projects outward from this casing part, the cooling-housing inflow (25) and the cooling-housing outflow (26) being disposed on the connection part (31), the first connection (52) of the connecting device (45) being connected in a releasable manner to the cooling-housing inflow (25) via the first flow channel (47), and the second connection (56) of the connecting device (45) being connected in a releasable manner to the cooling-housing outflow (26) via the second flow channel (48).

2. Motor-pump unit according to Claim 1, **characterized in that** the connecting device (45) is configured as a structural unit which is adapted to be connected in a releasable manner to the suction inlet (14) and the cooling-housing inflow (25) and outflow (26).

3. Motor-pump unit according to Claim 1 or 2, **characterized in that** the connecting device (45) is configured as a rigid conduit system.

4. Motor-pump unit according to one of the preceding claims, **characterized in that** the connecting device (45) is produced from plastics material.

5. Motor-pump unit according to one of the preceding claims, **characterized in that** the two flow channels (47, 48) are disposed parallel to one another.

6. Motor-pump unit according to one of the preceding claims, **characterized in that** the two flow channels (47, 48) are configured as rigid tubing lines (49, 50).

7. Motor-pump unit according to one of the preceding claims, **characterized in that** the cooling housing (20) is adapted to be connected in a releasable manner to a housing (58) of the pump (11).

8. Motor-pump unit according to one of the preceding claims, **characterized in that** the cooling housing (20) is produced from plastics material.

9. Motor-pump unit according to one of the preceding claims, **characterized in that** the cooling-housing inflow (25) and the cooling-housing outflow (26) are disposed one beside the other.

10. Motor-pump unit according to Claim 1, **characterized in that** the connection part (31) projects beyond the casing part (32) in the direction of the pump (11).

11. Motor-pump unit according to Claim 1 or 10, **characterized in that** the casing part (32) is connected integrally to the connection part (31).

12. Motor-pump unit according to one of the preceding claims, **characterized in that** the cooling housing (20) has a casing part (32) which encloses the motor housing (17) in the circumferential direction and comprises, on its inside, a plurality of spaced-apart supporting ribs (22, 23) which engage against the motor housing (17).

13. Motor-pump unit according to Claim 12, **characterized in that**, in the cavity, a supporting rib (23) is disposed between the cooling-housing inflow (25) and the cooling-housing outflow (26).

14. Motor-pump unit according to Claim 12 or 13, **characterized in that** the supporting ribs (22, 23) define a labyrinthine flow path which leads around the motor housing (17) in the circumferential direction from the cooling-housing inflow (25) to the cooling-housing outflow (26).

15. Motor-pump unit according to one of the preceding claims, **characterized in that** the cooling housing (20) has a casing part (32) which is configured in the manner of a cylindrical sleeve and is adapted to be pushed axially onto the motor housing (17).

16. Motor-pump unit according to one of the preceding claims, **characterized in that** the cooling housing (20) has a sealing lip (37) which is adapted to be positioned in a liquid-tight manner against the motor housing (17).

17. Motor-pump unit according to one of the preceding claims, **characterized in that** the motor housing (17) has an outwardly projecting annular flange (39) and the cooling housing (20) is adapted to be pushed onto the flange (39) in a liquid-tight manner.

## Revendications

1. Unité formant motopompe, destinée notamment à un appareil de nettoyage à haute pression, ladite unité comportant un moteur électrique (12) et une pompe (11), la pompe (11) possédant une entrée d'aspiration (14) pour aspirer un liquide et une sortie sous pression (15) pour délivrer un liquide sous pression et le moteur électrique (12) comportant un boîtier de moteur (17) qui est entouré d'un boîtier de refroidissement (20) en ménageant un espace creux, le liquide de refroidissement pouvant être amené à l'espace creux par un orifice d'entrée (25) du boîtier de refroidissement et être évacué par un orifice de sortie (26) du boîtier de refroidissement, l'orifice de sortie (26) du boîtier de refroidissement étant en liaison d'écoulement avec l'entrée d'aspiration (14), et l'unité formant motopompe (10) possédant un dispositif de liaison (45) disposé latéralement à côté de la pompe (11) et comportant un premier raccord (52) qui est relié à l'orifice d'entrée (25) du boîtier de refroidissement par le biais d'un premier canal d'écoulement (47) et un second raccord (56) qui est relié à l'orifice de sortie (26) du boîtier de refroidissement par le biais d'un second canal d'écoulement (48) et qui est raccordé à l'entrée d'aspiration (14), **caractérisée en ce que** le boîtier de refroidissement (20) comporte une pièce d'enveloppe (32) entourant le boîtier de moteur (17) et une pièce de raccordement (31) saillant de ladite pièce d'enveloppe vers l'extérieur, l'orifice d'entrée (25) du boîtier de refroidissement et l'orifice de sortie (26) du boîtier de refroidissement étant disposés au niveau de la pièce de raccordement (31), le premier raccord (52) du dispositif de liaison (45) étant relié de façon amovible à l'orifice d'entrée (25) du boîtier de refroidissement par le biais du premier canal d'écoulement (47) et le second raccord (56) du dispositif de liaison (45) étant relié de façon amovible à l'orifice de sortie (26) du boîtier de refroidissement par le biais du second canal d'écoulement (48).

2. Unité formant motopompe selon la revendication 1, **caractérisée en ce que** le dispositif de liaison (45) est conformé en module pouvant être relié de façon amovible à l'entrée d'aspiration (14) et à l'orifice d'entrée (25) et à l'orifice de sortie (26) du boîtier de refroidissement.

3. Unité formant motopompe selon la revendication 1 ou 2, **caractérisée en ce que** le dispositif de liaison (45) est conformé en système de conduits rigides.

4. Unité formant motopompe selon l'une des revendications précédentes, **caractérisée en ce que** le dispositif de liaison (45) est fabriqué à partir d'une matière plastique.

5. Unité formant motopompe selon l'une des revendications précédentes, **caractérisée en ce que** les deux canaux d'écoulement (47, 48) sont disposés parallèlement à l'autre.

6. Unité formant motopompe selon l'une des revendications précédentes, **caractérisée en ce que** les deux canaux d'écoulement (47, 48) sont conformés en conduits tubulaires rigides (49, 50).

7. Unité formant motopompe selon l'une des revendications précédentes, **caractérisée en ce que** le boîtier de refroidissement (20) peut être relié de façon amovible à un boîtier de pompe (58) de la pompe (11).

8. Unité formant motopompes selon l'une des revendications précédentes, **caractérisée en ce que** le boîtier de refroidissement (20) est fabriqué à partir d'une matière plastique.

9. Unité formant motopompe selon l'une des revendications précédentes, **caractérisée en ce que** l'orifice d'entrée (25) du boîtier de refroidissement et l'orifice de sortie (26) du boîtier de refroidissement sont disposés l'un à côté de l'autre.

10. Unité formant motopompe selon la revendication 1, **caractérisée en ce que** la pièce de raccordement (31) fait saillie au-dessus de la pièce d'enveloppe (32) en direction de la pompe (11).

11. Unité formant motopompe selon la revendication 1 ou 10, **caractérisée en ce que** la pièce d'enveloppe (32) est reliée d'une seule pièce à la pièce de raccordement (31).

12. Unité formant motopompe selon l'une des revendications précédentes, **caractérisée en ce que** le boîtier de refroidissement (20) possède une pièce d'enveloppe (32) qui entoure le boîtier de moteur (17) dans la direction périphérique et qui comporte du côté intérieur plusieurs nervures (22, 23) qui sont disposées à distance l'une de l'autre et qui portent contre le boîtier de moteur (17).

13. Unité formant motopompe selon la revendication 12, **caractérisée en ce qu'**une nervure (23) est disposée dans l'espace creux ménagé entre l'orifice d'entrée (25) du boîtier refroidissement et l'orifice de sortie (26) du boîtier de refroidissement.

14. Unité formant motopompe selon la revendication 12, **caractérisée en ce que** les nervures (22, 23) définissent, depuis l'orifice d'entrée (25) du boîtier de refroidissement jusqu'à l'orifice de sortie (26) du boîtier de refroidissement, un chemin d'écoulement labyrinthique courant autour du boîtier de moteur (17) dans la direction périphérique.

15. Unité formant motopompe selon l'une des revendications précédentes, **caractérisée en ce que** le boîtier de refroidissement (20) possède une pièce d'enveloppe (32) qui est conformée en enveloppe cylindrique et qui peut coulisser sur le boîtier de moteur (17) dans une direction axiale.

16. Unité formant motopompe selon l'une des revendications précédentes, **caractérisée en ce que** le boîtier de refroidissement (20) possède une lèvre d'étanchéité (37) qui peut être appliquée sur le boîtier de moteur (17) pour réaliser une étanchéité aux liquides.

17. Unité formant motopompe selon l'une des revendications précédentes, **caractérisée en ce que** le boîtier de moteur (17) possède un rebord annulaire (39) qui s'étend vers l'extérieur et sur lequel le boîtier de refroidissement (20) peut coulisser de façon étanche aux liquides.
